# EUROPÄISCHE PATENTSCHRIFT

(11) **EP 0 573 867 B1**
(45) Veröffentlichungstag und Bekanntmachung des Hinweises auf die Patenterteilung: **12.03.1997**
(21) Anmeldenummer: 93108738.1
(22) Anmeldetag: 01.06.1993
(51) Int. Cl.: C08G 18/50, C08G 18/65

(54) **Verfahren zur Herstellung von Urethan- oder Urethan- und Harnstoffgruppen gebunden enthaltenden Elastomeren unter Mitverwendung von N-perethoxylierten Polyoxyalkylen-polyaminen als Aufbaukomponente**
Process for the preparation of urethane or urethane and urea groups-containing elastomers by using N-perethoxylated polyoxyalkylene-polyamines as reactive components
Procédé de préparation d'élastomères contenant des groupes uréthane ou uréthane et urée en utilisant des polyoxyalkylène-polyamines N-peréthoxylées comme composants réactifs

(30) Priorität: 06.06.1992 DE 4218790
(43) Veröffentlichungstag der Anmeldung: 15.12.1993
(73) Patentinhaber: BASF Aktiengesellschaft, 67063 Ludwigshafen (DE)
(72) Erfinder: Hinz, Werner, Dr., W-6710 Frankenthal (DE); Maletzko, Christian, Dr., W-6800 Mannheim 31 (DE); Chakrabarti, Sarbananda, W-6700 Ludwigshafen (DE); Becker, Johannes, Dr., W-6700 Ludwigshafen (DE); Bruchmann, Bernd, Dr., W-6700 Ludwigshafen (DE)

(56) Entgegenhaltungen:
- EP-A- 0 291 770
- EP-A- 0 438 695
- DE-A- 1 917 408
- US-A- 4 465 858

## Beschreibung

Gegenstand der Erfindung ist ein Verfahren zur Herstellung von elastischen, zelligen oder vorzugsweise kompakten, Urethan- oder Urethan- und Harnstoffgruppen gebunden enthaltenden Elastomeren, vorzugsweise Elastomer-Formkörpern, insbesondere Airbagabdeckungen, durch Umsetzung der an sich bekannten organischen, gegebenenfalls modifizierten Polyisocyanate (a) mit höhermolekularen Verbindungen mit mindestens zwei reaktiven Wasserstoffatomen (b), mindestens einem N-perethoxylierten Polyoxyalkylen-polyamin (c) und mindestens einem niedermolekularen Kettenverlängerungs- und/oder Vernetzungsmittel (d) in Gegenwart oder Abwesenheit von Katalysatoren (e), Hilfsmitteln (f) und Treibmitteln (g) in einem Formwerkzeug.

Die Herstellung von Urethangruppen, Harnstoffgruppen und Urethan- und Harnstoffgruppen gebunden enthaltenden Elastomeren und Verfahren zur Herstellung von elastischen, kompakten oder zelligen Formkörpern aus derartigen Elastomeren mit Hilfe der RIM-Technik (reaction injection moulding) sind aus zahlreichen Literatur- und Patentpublikationen bekannt.

Nach Angaben der DE-B-2622951 (US-A-4 218 543) können gegebenenfalls zellige, elastische Formkörper mit einer geschlossenen Oberflächenschicht aus Polyurethan-Polyharnstoff-Elastomeren nach dem Prinzip der Reaktionsspritzguß-technik hergestellt werden. Die hierfür geeigneten Formulierungen bestehen im wesentlichen aus organischen Polyisocyanaten, Polyolen, reaktiven aromatischen Di- bzw. Polyaminen, die in o-Stellung zur Aminogruppe durch Alkylgruppen substituiert sind und starken Katalysatoren für die Reaktion zwischen Hydroxyl- und Isocyanatgruppen. Wesentlich hierbei ist, daß die aromatischen Di- bzw. Polyamine in jedem Verhältnis mit Polyolen des Molekulargewichts 12000 bis 1800 mischbar sind, die Alkylsubstituenten 1 bis 3 Kohlenstoffatome aufweisen, wobei mindestens zwei der Alkylsubstituenten 2 bis 3 Kohlenstoffatome besitzen und jede der o-Stellungen zu den Aminogruppen substituiert ist. Derartige Systeme besitzen Start zeiten bis herab zu weniger als einer Sekunde; der Übergang der flüssigen in die feste Phase erfolgt nahezu schlagartig, was dazu führt, daß das flüssige Reaktionsgemisch in der Form an deren Wandungen gleichsam erstarrt.

Es ist ferner bekannt, daß die Reaktivität von aromatisch gebundenen Aminogruppen gegenüber Isocyanaten durch elektronenanziehende Substituenten stark vermindert werden kann. Beispiele für derartige aromatische Diamine sind nach DE-C-12 16 538 (GB-PS 981 935) 3,3'-Dichlor-4,4'-diamino-diphenylmethan, 3,3'-Dinitro-4,4'-diamino-diphenylmethan und 3,3'-Dichlor-4,4'-diamino-diphenyl, deren Verarbeitung aus Bedenken hinsichtlich einer gesundheitsschädlichen Wirkung aufwendige und erschwerende Auflagen erfordert. Durch die stark elektronegativen Substituenten dieser Verbindungen wird jedoch die Reaktivität der aromatisch gebundenen Aminogruppen so stark herabgesetzt, daß die Durchhärtung bei nach der Reaktionsspritzgußtechnik hergestellten Formkörpern bis zu 15 Minuten erfordert und damit unwirtschaftlich wird.

Polyurethan-Polyharnstoff-Formulierungen mit im Vergleich zu Systemen gemäß DE-B-26 22 951 etwas verminderter Reaktivität werden nach Angaben der EP-A-026 915 erhalten, wenn man als aromatische Diamine 3,3',5,5'-tetraalkylsubstituierte 4,4'-Diamino-diphenylmethane verwendet, in denen die Alkyl-reste gleich oder verschieden sind und einen Methyl-, Ethyl-, Isopropyl-, sek.- oder tert.-Butylrest bedeuten, wobei mindestens einer der Substituenten ein Isopropyl- oder sek.-Butylrest sein muß. Die beschriebenen tetraalkylsubstituierten Diamino-diphenylmethane sind mit den Polyolen in den erforderlichen Mengen bei Raumtemperatur sehr gut mischbar und zeigen nur eine geringe oder gar keine Kristallisationsneigung, so daß die Formulierungen unter den für konventionelle RIM-Systeme üblichen Bedingungen gut handhabbar sind. Es zeigte sich jedoch auch, daß die beschriebenen tetraalkylsubstituierten 4,4'-Diaminodiphenylmethane für spezielle Anwendungen zu wenig reaktiv sein können.

Im Vergleich zu EP-A-026 915 etwas reaktivere Polyurethan-Polyharnstoff-Formulierungen werden in der EP-A-069 286 beschrieben. Als aromatische Diamine verwendet werden tri-alkylsubstituierte meta-Phenylendiamine, wobei zwei der Alkylsubstituenten gleich oder verschieden und lineare oder verzweigte Alkylreste mit 1 bis 4 C-Atomen sind und der 3. Alkylrest 4 bis 12 C-Atome aufweist oder ein fünf- oder sechsgliedriger Cycloalkylrest ist. Die Formulierungen weisen selbst bei einem relativ hohen Gehalt an Diaminen eine ausreichende Fließfähigkeit auf und ergeben Formkörper mit einer hohen Wärmeformbeständigkeit, die keinen progressiven Abfall der Schubmodulkurven zwischen 100 und 200°C zeigen.

Diese Verfahren weisen alle den Nachteil auf, daß der Reaktivitätsunterschied bei der Addition an Isocyanatgruppen zwischen den höhermolekularen Verbindungen mit mindestens zwei primären Hydroxylgruppen und den aromatischen Diaminen, trotz sterischer Behinderung der Aminogruppen beträchtlich ist und nur durch die Verwendung von synergistisch wirksamen Katalysatorkombinationen aus tertiären Aminen und Metallsalzen, z.B. Dibutylzinndilaurat, zur Beschleunigung der Hydroxyl-Isocyanat-Polyadditionsreaktion überwunden werden kann. Mit Metallsalzkatalysatoren hergestellte Polyurethan-Polyharnstoff-Elastomere depolymerisieren jedoch bei Temperaturen über 150°C, wobei eine länger anhaltende Hochtemperatureinwirkung zur völligen Zerstörung der mechanischen Eigenschaften des Materials führen kann.

Bekannt ist ferner die teilweise oder ausschließliche Verwendung von Polyoxyalkylen-polyaminen mit Molekulargewichten von 1100 bis 16000 zur Herstellung von elastischen Polyurethan-Polyharnstoff- oder Polyharnstoff-Elastomeren z.B. aus den EP-A-033 498 (US-A-4 269 945), EP-A-81 701, EP-A-93 861 (US-A-4 396 729), EP-A-92 672, EP-A-93 862 (US-A-4 444 910 und US-A-4 433 067), EP-A-93 334 und EP-A-93 336.

Nach Angaben der beispielsweise genannten EP-A-81 701 können höhermolekulare Polyoxyalkylen-polyamine mit an aliphatische oder aromatische Reste gebundenen Aminogruppen verwendet werden. Aliphatische Polyoxyalkylen-polyamine sind jedoch bekanntermaßen äußerst reaktiv, so daß die Verarbeitung von RIM-Formulierungen auf dieser Grundlage, z.B. aufgrund kurzer Schußzeiten und dadurch bedingtem geringem Materialaustrag, maschinentechnisch, insbesondere bei der Fertigung von voluminösen Formkörpern, zu erheblichen Problemen führen kann. Etwas langsamer als aliphatische Polyoxyalkylen-polyamine reagieren die Polyoxyalkylen-polyamine mit aromatisch gebundenen Aminogruppen. Nachteilig an diesen Verbindungen ist ihre kostspielige Herstellung in mehrstufigen Verfahren sowie insbesondere ihre relativ hohe Viskosität, beispielsweise von mehr als 20 000 mPas bei 25°C, die bei der Verarbeitung von Verstärkungsmittel enthaltenden Formulierungen große Schwierigkeiten bereiten kann.

Bekannt ist ferner die Verwendung von Isocyanatgruppen enthaltenden Prepolymeren und Quasiprepolymeren mit NCO-Gehalten zwischen 9 und 31 Gew.%, die unter Verwendung von gegebenenfalls modifiziertem 4,4'-Diphenylmethan-diisocyanat hergestellt wurden, aus den US-Patentschriften 4 048 105, 4 102 833 und 4 374 210 in Polyurethan-Systemen und die Herstellung von alkoxylierten Polyoxyalkylen-polyaminen. Nach Angaben der DE-B-1 917 408 und DE-A-1 966 059 sowie der DE-A-1 966 058 (CA-A-914 850) können Polyoxypropylen-diamine oder -triamine bei 125°C bis 170°C mit Ethylen- oder Propylenoxid umgesetzt und die auf diese Weise erhaltenen Polyoxyalkylen-polyamin-Alkylenoxidaddukte mit Polyisocyanaten zu Polyurethan-Schaumstoffen weiterverarbeitet werden. Alkoxylierte Polyoxyalkylen-polyamine mit einem Gehalt an tertiären Aminogruppen von mehr oder weniger als 90 % werden nach Angaben der US-A-4 465 858 und US-A-4 479 010 hergestellt durch Umsetzung von Polyoxyalkylen-polyaminen mit Alkylenoxiden in Gegenwart von 5 bis 15 Gew.-% Wasser, bezogen auf das Polyoxyalkylen-polyamin, bei 75 bis 85°C und Nachbehandlung bei 75 bis 135°C. Die erhaltenen alkoxylierten Polyoxyalkylen-polyamine eignen sich zur Herstellung von flexiblen Polyurethan-Schaumstoffen, als tertiäre Aminogruppen aufweisende Polyurethan-Katalysatoren oder als Vernetzungsmittel für Polyurethan-Schaumstoffe, -Elastomere und -Klebstoffe.

Durch die Auswahl geeigneter höhermolekularer Verbindungen mit mindestens zwei reaktiven Wasserstoffatomen, wie z.B. Polyether- und/oder Polyesterpolyolen, Polyoxyalkylen-polyaminen mit an aliphatische oder aromatische Reste gebundenen primären Aminogruppen, oder insbesondere entsprechend substituierter aromatischer primärer Diamine als Kettenverlängerungsmittel sowie von speziellen Katalysatoren oder Katalysatorsystemen versuchte man die RIM-Formulierungen den gegebenen Erfordernissen, wie z.B. Volumen und Geometrie des Formwerkzeugs, anzupassen. Nachteilig an dieser Methode ist jedoch, daß durch die eingesetzten Ausgangsverbindungen nicht nur die Reaktivität der RIM-Formulierungen, sondern auch die mechanischen Eigenschaften der erhaltenen Formkörper beeinflußt werden, so daß Formkörper mit bestimmten Raumformen und größeren Abmessungen teilweise nicht oder nur mit verminderten mechanischen Eigenschaften hergestellt werden können, da die Reaktionsmischungen beispielsweise nicht ausreichend fließfähig sind oder in den erforderlichen Mengen nicht in das Formwerkzeug eingebracht werden können.

Durch den zunehmenden Einsatz von spezifisch leichten Werkstoffen in der Industrie werden die mechanischen Anforderungen an Kunststoff-Formkörper oft so hoch, daß diese, insbesondere von zelligen Formkörpern, häufig nur erfüllt werden, wenn mechanische Verstärkungselemente, sogenannte Einleger, zusätzlich Anwendung finden. Diese Aussage verliert auch nicht an Gültigkeit bei Verfahren zur Herstellung von elastischen, zelligen oder kompakten, Urethan- oder Urethan- und Harnstoffgruppen enthaltenden Formkörpern, wobei die Verarbeitung derartiger Polyurethan (PU)- oder Polyurethan-Polyharnstoff (PU-PH)-Formulierungen in Gegenwart von Einlegern besonders schwierig und, bedingt durch die Bildung einer großen Anzahl von nicht verwertbaren Ausschußteilen, auch teuer ist. Nur durch den Einsatz von Einlegern in zellige Formkörper, wie z.B. Airbagabdeckungen, kann beispielsweise die geforderte hohe Flexibilität und hohe Reißfestigkeit außerhalb der definierten Sollbruchstellen z.B. an Airbagabdeckungen gewährleistet werden.

Aber auch kompakte Formteile, wie z.B. nach der RIM-Technik hergestellte Kraftfahrzeugaußenteile aus PU-PH-Elastomeren, zeigen häufig nach dem Entformen eine unerwünschte Sprödigkeit und sind daher leicht brüchig. Diese sogenannte Kaltsprödigkeit, die insbesondere bei Formkörpern aus Formulierungen mit einem hohen Anteil an Kettenverlängerungs- und/ oder Vernetzungsmitteln auftritt, kann teilweise nur durch eine längere Lagerung und/oder einen Temperungsprozeß reduziert oder beseitigt werden. Die erhöhte Bruchempfindlichnach der Entformung verursacht ebenfalls erhöhte Produktionskosten.

Die Aufgabe der vorliegenden Erfindung bestand darin, die vorgenannten Nachteile zumindest teilweise, zweckmäßigerweise jedoch vollständig zu beseitigen und PU- oder PU-PH-Formulierungen zur Herstellung von kompakten oder zelligen Formkörpern zu entwickeln, die ohne die Verwendung von Einlegern verbesserte mechanische Eigenschaften, insbesondere eine hohe Flexibilität bei gleichzeitig hoher Reißfestigkeit zeigen bzw. bei PU-PH-Formkörpern, unter Beibehaltung der hervorragenden mechanischen Eigenschaften eine verminderte oder keine Kaltsprödigkeit aufweisen, das heißt eine höhere Flexibilität nach der Entformung zeigen.

Diese Aufgabe konnte überraschenderweise gelöst werden durch die zusätzliche Mitverwendung von bestimmten, vollständig an den Aminogruppen oxalkylierten Polyoxyalkylen-polyaminen, neben den bekannten höhermolekularen Verbindungen und niedermolekularen Kettenverlängerungs- und/oder Vernetzungsmitteln, als Verbindung mit reaktiven Wasserstoffatomen.

Gegenstand der Erfindung ist somit ein Verfahren zur Herstellung von elastischen, Urethan- oder Urethan- und Harnstoffgruppen gebunden enthaltenden Elastomeren durch Umsetzung von
a) mindestens einem organischen und/oder modifizierten organischen Polyisocyanat mit
b) mindestens einer Verbindung zwei reaktiven Wasserstoffatomen, einer Funktionalität von 2 bis 4 und einem Molekulargewicht von 1200 bis 8000, ausgewählt aus der Gruppe der Polyole, der Polyoxyalkylen-polyamine mit primären und/oder sekundären Aminogruppen und Polyoxyalkylen-polyaldimine und/oder -polyketimine oder Mischungen davon,
c) mindestens einem oxalkylierten Polyoxyalkylen-polyamin und
d) niedermolekularen Kettenverlängerungs- und/oder Vernetzungsmitteln
   in Gegenwart oder Abwesenheit von
e) Katalysatoren und/oder
f) Hilfsmitteln,
das dadurch gekennzeichnet ist, daß man als oxalkylierte Polyoxyalkylen-polyamine (c) N-perethoxylierte Polyoxyalkylenpolyamine verwendet.

Nach einer bevorzugten Ausgestaltung der Erfindung eignet sich das Verfahren insbesondere zur Herstellung von elastischen, Urethan- oder Urethan- und Harnstoffgruppen gebunden enthaltenden Airbagabdeckungen gemäß Anspruch 8.

Zweckmäßigerweise finden solche N-perethoxylierten Polyoxyalkylen-polyamine beim erfindungsgemäßen Verfahren Verwendung, die hergestellt werden aus Polyoxyalkylen-polyaminen mit mindestens 2, vorzugsweise 2 oder/und 3 primären Aminogruppen und einem Molekulargewicht von mindestens 200, vorzugsweise von 240 bis 5850.

Durch die Mitverwendung der erfindungsgemäß verwendbaren N-perethoxylierten Polyoxyalkylen-polyamine, die hinsichtlich ihrer Struktur und ihres Molekulargewichts als höhermolekulare Vernetzungsmittel angesehen werden können, und die aufgrund ihrer speziellen Reaktivität gezielt an einem bestimmten Zeitpunkt in die Polyisocyanat-Polyadditionsreaktion eingreifen, werden überraschenderweise Elastomere mit einer höheren Reißfestigkeit und größeren Flexibilität sowie geringeren Sprödigkeit erhalten. Aus PH-PU-Formulierungen können mit Hilfe der RIM-Technik Formkörper hergestellt werden, die bei vollem Erhalt ihrer sehr guten mechanischen Eigenschaften nicht mehr kaltspröde sind. Auf die Verwendung von Einlegern, wie sie z.B. für die Herstellung von Airbagabdeckungen für Automobile benötigt werden, kann verzichtet werden. Nach dem erfindungsgemäßen Verfahren werden daher bevorzugt einlegerfreie Formkörper hergestellt, die als Airbagabdeckungen in Kraftfahrzeugen verwendet werden.

Zur Herstellung der erfindungsgemäß verwendbaren N-perethoxylierten Polyoxyalkylen-polyamine und den nach dem erfindungsgemäßen Verfahren zur Herstellung der elastischen, Urethan- oder Urethan- und Harnstoffgruppen gebunden enthaltenden Elastomeren oder Elastomer-Formkörpern verwendbaren anderen Ausgangsstoffe ist im einzelnen folgendes auszuführen:
a) Als organische Polyisocyanate kommen die an sich bekannten aliphatischen, cycloaliphatischen und vorzugsweise aromatischen mehrwertigen Isocyanate in Frage. Im einzelnen seien beispielhaft genannt: 1,6-Hexamethylen-diisocyanat, 1-Isocyanato-3,5,5-trimethyl-3-isocyanatomethyl-cyclohexan, 2,4- und 2,6-Hexahydrotoluylen-diisocyanat sowie die entsprechenden Isomerengemische, 4,4'-, 2,2'- und 2,4'-Dicyclohexylmethan-diisocyanat sowie die entsprechenden Isomerengemische, Mischungen aus 4,4'-, 2,2'- und 2,4'-Dicyclohexylmethan-diisocyanaten und Polymethylen-polycyclohexylen-polyisocyanaten, 2,4- und 2,6-Toluylen-diisocyanat und die entsprechenden Isomerengemische, 4,4'-, 2,4'- und 2,2'-Diphenylmethandiisocyanat und die entsprechenden Isomerengemische, Mischungen aus 4,4'-, 2,4'- und 2,2'-Diphenylmethan-diisocyanaten und Polyphenyl-polymethylen-polyisocyanaten (Roh-MDI) und Mischungen aus Roh-MDI und Toluylen-diisocyanaten.
   Häufig werden auch sogenannte modifizierte mehrwertige Isocyanate, d.h. Produkte, die durch chemische Umsetzung obiger Di- und/oder Polyisocyanate erhalten werden, verwendet. Beispielhaft genannt seien Ester-, Harnstoff-, Biuret-, Allophanat- und vorzugsweise Carbodiimid-, Isocyanurat- und/oder Urethangruppen enthaltende Di- und/ oder Polyisocyanate. Im einzelnen kommen beispielsweise in Betracht: Urethangruppen enthaltende aromatische Polyisocyanate mit NCO-Gehalten von 33,6 bis 8 Gew.%, vorzugsweise von 31 bis 21 Gew.%, beispielsweise mit niedermolekularen Diolen, Triolen, Oxyalkylenglykolen, Dioxyalkylenglykolen oder Polyoxyalkylen-glykolen mit Molekulargewichten bis 800 modifiziertes 4,4'-Diphenylmethan-diisocyanat oder Toluylendiisocyanat, wobei als Di- bzw. Polyoxyalkylen-glykole, die einzeln oder als Gemische eingesetzt werden können, beispielsweise genannt seien: Diethylen-, Dipropylen-, Polyoxyethylen-, Polyoxypropylen- und Polyoxypropylen-polyoxyethylen-glykole. Geeignet sind auch NCO-Gruppen enthaltende Prepolymere mit NCO-Gehalten von 25 bis 8 Gew.%, vorzugsweise von 21 bis 14 Gew.%. Bewährt haben sich ferner flüssige Carbodiimidgruppen und/oder Isocyanuratringe enthaltende Polyisocyanate mit NCO-Gehalten von 33,6 bis 8 Gew.-%, vorzugsweise 31 bis 21 Gew.%, z.B. auf Basis von 4,4'-, 2,4'- und/oder 2,2'-Diphenylmethan-diisocyanat und/oder 2,4- und/oder 2,6-Toluylen-diisocyanat und vorzugsweise 2,4- und 2,6-Toluylen-diisocyanat sowie die entsprechenden Isomerengemische, 4,4'-, 2,4'- und 2,2'-Diphenylmethan-diisocyanat sowie die entsprechenden Isomerengemische z.B. aus 4,4'- und 2,4'-Diphenylmethandiisocyanaten, Roh-MDI und Gemische aus Toluylen-diisocyanaten und Roh-MDI.
   Insbesondere kommen jedoch zur Anwendung: (i) Carbodiimid- und/oder Urethangruppen enthaltende Polyisocyanate aus 4,4'-Diphenylmethan-diisocyanat oder einer Mischung aus 4,4'- und 2,4'-Diphenylmethan-diisocyanaten mit einem NCO-Gehalt von 33,6 bis 8 Gew.%, (ii) NCO-Gruppen enthaltende Prepolymere mit einem NCO-Gehalt von 8 bis 25 Gew.%, bezogen auf das Prepolymergewicht, hergestellt durch Umsetzung von Polyoxyalkylen-polyolen mit einer Funktionalität von 2 bis 4 und einem Molekulargewicht von 600 bis 6000 mit 4,4'-Diphenylmethan-diisocyanat oder einer Mischung aus 4,4'- und 2,4'-Diphenylmethandiisocyanaten und Mischungen aus (i) und (ii).
   Zur Herstellung der NCO-Gruppen enthaltenden Prepolymeren eignen sich, wie bereits dargelegt wurde, Polyoxyalkylen-polyole mit einer Funktionalität von 2 bis 4, vorzugsweise 2 bis 3 und einem Molekulargewicht von 600 bis 6000, vorzugsweise von 1000 bis 4500. Analoge Polyoxyalkylen-polyole mit Molekulargewichten von mindestens 200, vorzugsweise 240 bis ungefähr 5850 können z.B. eingesetzt werden zur Polyoxyalkylen-polyaminherstellung, die ihrerseits als Ausgangsstoffe zur Herstellung der erfindungsgemäß geeigneten N-perethoxylierten Polyoxyalkylen-polyamine oder in Verbindung mit diesen zur Herstellung der Urethan- und Harnstoffgruppen gebunden enthaltenden Elastomeren oder Elastomer-Formkörper Verwendung finden können. Derartige Polyoxyalkylen-polyole können nach bekannten Verfahren, beispielsweise durch anionische Polymerisation mit Alkalihydroxiden, wie Natrium- oder Kaliumhydroxid, oder Alkalialkoholaten, wie Natriummethylat, Natrium- oder Kaliumethylat oder Kaliumisopropylat als Katalysatoren oder durch kationische Polymerisation mit Lewis-Säuren, wie Antimonpentachlorid, Bortrifluorid-Etherat u.a. oder Bleicherde als Katalysatoren aus einem oder mehreren Alkylenoxiden mit 2 bis 4 Kohlenstoffatomen im Alkylenrest und einem Startermolekül, das 2 bis 4, vorzugsweise 2 oder 3 reaktive Wasserstoffatome gebunden enthält, hergestellt werden.
   Geeignete Alkylenoxide sind beispielsweise Tetrahydrofuran, 1,3-Propylenoxid, 1,2- bzw. 2,3-Butylenoxid und vorzugsweise Ethylenoxid und 1,2-Propylenoxid. Die Alkylenoxide können einzeln, alternierend nacheinander oder als Mischungen verwendet werden. Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegebenenfalls N-mono-, N,N- und N,N'-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin, Phenylendiamine, 2,3-, 2,4-, 3,4- und 2,6-Toluylendiamin und 4,4'-, 2,4'- und 2,2'-Diamino-diphenylmethan.
   Als Startermoleküle kommen ferner in Betracht: Alkanolamine, wie Ethanolamin, Diethanolamin, N-Methyl- und N-Ethyl-ethanolamin, N-Methyl- und N-Ethyl-diethanolamin und Triethanolamin sowie Ammoniak. Vorzugsweise verwendet werden mehrwertige, insbesondere zwei- und/oder dreiwertige Alkohole und Dialkylenglykole, wie z.B. Ethandiol, Propandiol-1,2 und -1,3, Butandiol-1,4, Hexandiol-1,6, Glycerin, Trimethylol-propan und Pentaerythrit sowie Diethylenglykol und Dipropylenglykol.
   Die Polyoxyalkylen-polyole können einzeln oder in Form von Mischungen verwendet werden.
b) Als höhermolekulare Verbindungen b) mit mindestens zwei reaktiven Wasserstoffatomen können beispielsweise solche mit einer Funktionalität von 2 bis 4, vorzugsweise von 2 bis 3 und einem Molekulargewicht von 1200 bis 8000, vorzugsweise von 1800 bis 6000 Verwendung finden. Bewährt haben sich z.B. Polyoxyalkylen-polyamine mit primären und/oder sekundären Aminogruppen, Polyoxyalkylen-polyaldimine und/oder -polyketimine und/oder vorzugsweise Polyole, zweckmäßigerweise ausgewählt aus der Gruppe der Polyoxyalkylen-polyole, Polyester-polyole, Polythioether-polyole, hydroxylgruppenhaltigen Polyesteramide, hydroxylgruppenhaltigen Polyacetale und hydroxylgruppenhaltigen aliphatischen Polycarbonate oder Mischungen aus mindestens 2 der genannten höhermolekularen Verbindungen mit mindestens 2 reaktiven Wasserstoffatomen. Vorzugsweise Anwendung finden Polyoxyalkylen-polyamine mit primären oder sekundären Aminogruppen und Polyoxyalkylen-polyole.
   Geeignete Polyester-polyole können beispielsweise aus organischen Dicarbonsäuren mit 2 bis 12 Kohlenstoffatomen, vorzugsweise aliphatischen Dicarbonsäuren mit 4 bis 6 Kohlenstoffatomen und mehrwertigen Alkoholen, vorzugsweise Diolen, mit 2 bis 12 Kohlenstoffatomen, vorzugsweise 2 bis 6 Kohlenstoffatomen hergestellt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure und Terephthalsäure. Die Dicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäureester von Alkoholen mit 1 bis 4 Kohlenstoffatomen oder Dicarbonsäureanhydride eingesetzt werden. Vorzugsweise verwendet werden Dicarbonsäurege-mische aus Bernstein-, Glutar- und Adipinsäure in Mengenverhältnissen von beispielsweise 20 bis 35 : 35 bis 50 : 20 bis 32 Gew.-Teilen, und insbesondere Adipinsäure. Beispiele für zwei- und mehrwertige Alkohole und Dialkylenglykole, insbesondere Diole sind: Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, Glycerin und Trimethylolpropan. Vorzugsweise verwendet werden Ethandiol, Diethylenglykol, 1,4-Butandiol, 1,5-Pentandiol, 1,6-Hexandiol oder Mischungen aus mindestens zwei der genannten Diole, insbesondere Mischungen aus 1,4-Butandiol, 1,5-Pentandiol und 1,6-Hexandiol. Eingesetzt werden können ferner Polyester-polyole aus Lactonen, z.B. ε-Caprolacton oder Hydroxycarbonsäuren, z.B. ω-Hydroxycapronsäure.
   Zur Herstellung der Polyester-polyole können die organischen, z.B. aromatischen und vorzugsweise aliphatischen Polycarbonsäuren und/oder -derivate und mehrwertigen Alkohole katalysatorfrei oder vorzugsweise in Gegenwart von Veresterungskatalysatoren, zweckmäßigerweise in einer Atmosphäre aus Inertgasen, wie z.B. Stickstoff, Kohlenmonoxid, Helium, Argon u.a. in der Schmelze bei Temperaturen von 150 bis 250°C, vorzugsweise 180 bis 220°C gegebenenfalls unter vermindertem Druck bis zu der gewünschten Säurezahl, die vorteilhafterweise kleiner als 10, vorzugsweise kleiner als 2 ist, polykondensiert werden. Nach einer bevorzugten Ausführungsform wird das Veresterungsgemisch bei den obengenannten Temperaturen bis zu einer Säurezahl von 80 bis 30, vorzugsweise 40 bis 30, unter Normaldruck und anschließend unter einem Druck von kleiner als 500 mbar, vorzugsweise 50 bis 150 mbar, polykondensiert. Als Veresterungskatalysatoren kommen beispielsweise Eisen-, Cadmium-, Kobalt-, Blei-, Zink-, Antimon-, Magnesium-, Titan- und Zinnkatalysatoren in Form von Metallen, Metalloxiden oder Metallsalzen in Betracht. Die Polykondensation kann jedoch auch in flüssiger Phase in Gegenwart von Verdünnungs- und/oder Schleppmitteln, wie z.B. Benzol, Toluol, Xylol oder Chlorbenzol, zur azeotropen Abdestillation des Kondensationswassers durchgeführt werden.
   Zur Herstellung der Polyester-polyole werden die organischen Polycarbonsäuren und/oder -derivate und mehrwertigen Alkohole vorteilhafterweise im Molverhältnis von 1:1 bis 1,8, vorzugsweise 1:1,05 bis 1,2 polykondensiert.
   Die erhaltenen Polyester-polyole besitzen vorzugsweise eine Funktionalität von 2 bis 3, insbesondere von 2 bis 2,4 und ein Molekulargewicht von 480 bis 3000, vorzugsweise 1200 bis 3000 und insbesondere 1800 bis 2500. Insbesondere als Polyole verwendet werden jedoch Polyoxyalkylen-polyole, die nach den vorgenannten Verfahren, beispielsweise durch anionische Polymerisation mit Alkalihydroxiden oder Alkalialkoholaten als Katalysatoren und unter Zusatz mindestens eines Startermoleküls, das mindestens 2 reaktive Wasserstoffatome gebunden enthält, oder durch kationische Polymerisation mit Lewis-Säuren oder Bleicherde als Katalysatoren aus einem oder mehreren Alkylenoxiden mit 2 bis 4 Kohlenstoffatomen im Alkylenrest hergestellt werden.
   Die Polyoxyalkylen-polyole, vorzugsweise Polyoxypropylen- und Polyoxypropylen-polyoxyethylen-polyole, besitzen eine Funktionalität von vorzugsweise 2 bis 4 und insbesondere 2 bis 3 und Molekulargewichte von 1200 bis 8000, vorzugsweise 1800 bis 6000 und insbesondere 2400 bis 4800 und geeignete Polyoxytetramethylen-glykole ein Molekulargewicht bis ungefähr 3500.
   Als Polyoxyalkylen-polyole eignen sich ferner polymermodifizierte Polyoxyalkylen-polyole, vorzugsweise Pfropf-polyoxyalkylen-polyole, insbesondere solche auf Styrol- und/oder Acrylnitrilbasis, die durch in situ Polymerisation von Acrylnitril, Styrol oder vorzugsweise Mischungen aus Styrol und Acrylnitril, z.B. im Gewichtsverhältnis 90 : 10 bis 10 : 90, vorzugsweise 70 : 30 bis 30 : 70, in zweckmäßigerweise den vorgenannten Polyoxyalkylen-polyolen analog den Angaben der deutschen Patentschriften 11 11 394, 12 22 669 (US-A-3 304 273, 3 383 351, 3 523 093), 11 52 536 (GB-A-10 40 452) und 11 52 537 (GB-A-987 618) hergestellt werden, sowie Polyoxyalkylen-polyoldispersionen, die als disperse Phase, üblicherweise in einer Menge von 1 bis 50 Gew.-%, vorzugsweise 2 bis 25 Gew.-%, enthalten: z.B. Polyharnstoffe, Polyhydrazide, tert.-Aminogruppen gebunden enthaltende Polyurethane und/oder Melamin und die z.B. beschrieben werden in der EP-B-011 752 (US-A-4 304 708), US-A-4 374 209 und DE-A-32 31 497.
   Die Polyoxyalkylen-polyole können ebenso wie die Polyester-polyole einzeln oder in Form von Mischungen verwendet werden. Ferner können sie mit den Pfropf-polyoxyalkylen-polyolen oder Polyester-polyolen sowie den hydroxylgruppenhaltigen Polyesteramiden, Polyacetalen, Polycarbonaten, Polyoxyalkylen-polyaminen, Polyoxyalkylen-polyaldiminen und/oder Polyoxyalkylen-polyketiminen gemischt werden.
   Als hydroxylgruppenhaltige Polyacetale kommen z.B. die aus Dihydroxyverbindungen, wie z.B. Diethylenglykol, Triethylenglykol, 4,4'-Dihydroxyethoxy-diphenyl-dimethylmethan, Hexandiol und Formaldehyd herstellbaren Verbindungen in Frage. Auch durch Polymerisation cyclischer Acetale lassen sich geeignete Polyacetale herstellen.
   Als Hydroxylgruppen aufweisende Polycarbonate kommen solche der an sich bekannten Art in Betracht, die beispielsweise durch Umsetzung von Diolen, wie Propandiol-(1,3), Butandiol-(1,4) und/oder Hexandiol-(1,6), Diethylenglykol, Triethylenglykol oder Tetraethylenglykol mit Diarylcarbonaten, z.B. Diphenylcarbonat, oder Phosgen hergestellt werden können.
   Zu den Polyesteramiden zählen z.B. die aus mehrwertigen, gesättigten und/oder ungesättigten Carbonsäuren bzw. deren Anhydriden und mehrwertigen gesättigten und/oder ungesättigten Aminoalkoholen oder Mischungen aus mehrwertigen Alkoholen und Aminoalkoholen und/oder Polyaminen gewonnenen, vorwiegend linearen Kondensate.
   Geeignete Polyoxyalkylen-polyamine können, wie bereits ausgeführt wurde, aus den obengenannten Polyoxyalkylen-polyolen nach bekannten Verfahren hergestellt werden. Beispielhaft genannt seien die Cyanoalkylierung von Polyoxyalkylen-polyolen und anschließende Hydrierung des gebildeten Nitrils (US-A-3 267 050) oder die teilweise oder vollständige Aminierung von Polyoxyalkylen-polyolen mit Aminen oder Ammoniak in Gegenwart von Wasserstoff und Katalysatoren (DE-A-12 15 373).
   Die Herstellung von Polyoxyalkylen-polyaminen mit primären oder sekundären Aminogruppen wird ferner beschrieben in der EP-A-81 701 und EP-A-438 695 (CA-A-2 033 444) und die von polyazomethinhaltigen, wie z.B. polyaldimin- oder polyketiminhaltigen Polyoxyalkylen-polyamine in der EP-A-438 696 (US-A-5 084 487).
c) Als zusätzliche Verbindung mit reaktiven Wasserstoffatomen zur Herstellung der elastischen, Urethan- oder Urethan- und Harnstoffgruppen enthaltenden Elastomeren oder Elastomer-Formkörpern werden erfindungsgemäß N-perethoxylierte Polyoxyalkylen-polyamine verwendet. Geeignete, an den primären Aminogruppen vollständig ethoxylierte Polyoxyalkylen-polyamine können nach bekannten Verfahren, beispielsweise in Gegenwart von Katalysatoren, vorzugsweise basischen Katalysatoren oder insbesondere katalysatorfrei bei erhöhten Temperaturen bei Atmosphären- oder erhöhtem Druck durch Umsetzung von Ethylenoxid mit Polyoxyalkylen-polyaminen erhalten werden, bei denen die Reaktion solange durchgeführt wird, bis sämtliche freien -NH-Gruppen ethoxyliert sind. Als Ausgangsstoffe zur Herstellung der N-perethoxylierten Polyoxyalkylen-polyamine finden zweckmäßigerweise Polyoxyalkylen-polyamine mit mindestens 2 und/oder 3 primären Aminogruppen und einem Molekulargewicht von mindestens 200, vorzugsweise von 240 bis 5850 Verwendung. Nach einer bevorzugten Ausführungsform können die erfindungsgemäß verwendbaren N-perethoxylierten Polyoxyalkylen-polyamine hergestellt werden durch Umsetzung von Polyoxyalkylen-di- und/oder -triaminen mit 1,0 bis 1,2 Molen, vorzugsweise 1,05 bis 1,15 Molen Ethylenoxid pro -NH-Gruppe in Abwesenheit von Katalysatoren bei einer Temperatur im Bereich von 90 bis 120°C, vorzugsweise 100 bis 120°C und einem Druck von 1 bis 8 bar, vorzugsweise 4 bis 6 bar. Als N-perethoxylierte Polyoxyalkylen-polyamine besonders bewährt haben sich und daher vorzugsweise verwendet werden Di-[N,N-di-(2-hydroxyethyl)amino]-polyoxyalkylene, Tri-[N,N-di-(2-hydroxyethyl)amino]-polyoxyalkylene oder Mischungen davon mit einem Molekulargewicht von 400 bis 6000, vorzugsweise von 560 bis 3200.
   Zur Herstellung der Formkörper nach dem erfindungsgemäßen Verfahren können die N-perethoxylierten Polyoxyalkylen-polyamine (c) in beliebigen Mengen eingesetzt werden. Zur Erzielung spezieller mechanischer Eigenschaften, aus verarbeitungstechnischen und Kostengründen sowie in Abhängigkeit von den Aufbaukomponenten (a), (b) und (d) hat es sich als zweckmäßig erwiesen, die erforderlichen Mengen mit Hilfe einfacher Versuchsreihen experimentell zu ermitteln. Zur Herstellung von elastischen Formkörpern mit hoher Flexibilität und Reißfestigkeit sowie minimaler Sprödigkeit werden die N-perethoxylierten Polyoxyalkylen-polyamine zweckmäßigerweise in einer Menge von 1 bis 50 Gew.-Teilen, vorzugsweise 1 bis 25 Gew.-Teilen, bezogen auf 100 Gew.-Teile der höhermolekularen Verbindungen mit mindestens zwei reaktiven Wasserstoffatomen (b) und niedermolekularen Kettenverlängerungs- und/oder Vernetzungsmitteln (d) verwendet.
d) Geeignete Kettenverlängerungs- und/oder Vernetzungsmittel besitzen üblicherweise Molekulargewichte kleiner als 500, vorzugsweise von 60 bis 400. Verwendet werden können beispielsweise Alkandiole mit 2 bis 12 Kohlenstoffatomen, vorzugsweise mit 2, 4 oder 6 Kohlenstoffatomen, wie z.B. Ethan-, 1,3-Propan-, 1,5-Pentan-, 1,6-Hexan-, 1,7-Heptan-, 1,8-Octan-, 1,9-Nonan-, 1,10-Decandiol und vorzugsweise 1,4-Butandiol, Dialkylenglykole mit 4 bis 8 Kohlenstoffatomen, wie z.B. Diethylenglykol und Dipropylen-glykol und di- bis tetrafunktionelle Polyoxyalkylenpolyole mit einem Molekulargewicht bis 500. Geeignet sind jedoch auch verzweigtkettige und/oder ungesättigte Alkandiole mit üblicherweise nicht mehr als 12 Kohlenstoffatomen, wie z.B. 1,2-Propandiol, 2-Methyl-, 2,2-Dimethyl-propandiol-1,3, 2-Butyl-2-ethylpropandiol-1,3, Buten-2-diol-1,4 und Butin-2-diol-1,4, Diester der Terephthalsäure mit Glykolen mit 2 bis 4 Kohlenstoffatomen, wie z.B. Terephthalsäure-bis-ethylenglykol- oder -butandiol-1,4, Hydroxyalkylenether des Hydrochinons oder Resorcins, wie z.B. 1,4-Di-(β-hydroxyethyl)-hydrochinon oder 1,3-Di(β-hydroxyethyl)-resorcin, Alkanolamine mit 2 bis 12 Kohlenstoffatomen, wie z.B. Ethanolamin, 2-Aminopropanol und 3-Amino-2,2-dimethylpropanol, N-Alkyldialkanolamine, wie z.B. N-Methyl- und N-Ethyldiethanolamin.
   Als höherfunktionelle Vernetzungsmittel seien beispielsweise tri- und höherfunktionelle Alkohole, wie z.B. Glycerin, Trimethylolpropan, Pentaerythrit und Trihydroxycyclohexane sowie Trialkanolamine, wie z.B. Triethanolamin genannt.
   Als Kettenverlängerungsmittel vorzüglich bewährt haben sich und daher bevorzugt verwendet werden alkylsubstituierte aromatische Polyamine mit Molekulargewichten vorzugsweise von 122 bis 400, insbesondere primäre aromatische Diamine, die in ortho-Stellung zu den Aminogruppen mindestens einen Alkylsubstituenten besitzen, welcher die Reaktivität der Aminogruppe durch sterische Hinderung vermindert, die bei Raumtemperatur flüssig und mit den höhermolekularen, mindestens difunktionellen Verbindungen (b) und N-perethoxylierten Polyoxyalkylenpolyamine (c) unter den Verarbeitungsbedingungen zumindest teilweise, vorzugsweise jedoch vollständig mischbar sind.
   In Betracht kommen beispielsweise alkylsubstituierte meta-Phenylendiamine der Formel 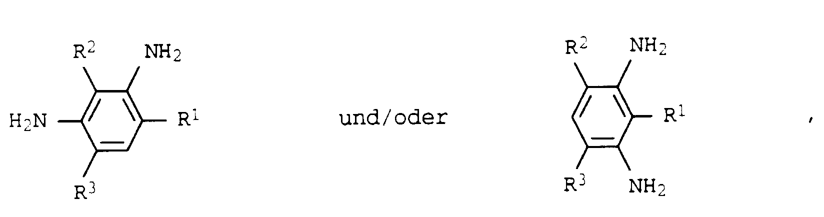 in denen R3 und R2 gleich oder verschieden sind und einen Methyl-, Ethyl-, Propyl- oder Isopropylrest bedeuten und R1 ein linearer oder verzweigter Alkylrest mit 1 bis 10, vorzugsweise 1 bis 6 Kohlenstoffatomen ist. Gut bewährt haben sich auch verzweigte Alkylreste R1 mit 4 bis 6 Kohlenstoffatomen, bei denen die Verzweigungsstelle am C1-Kohlenstoffatom sitzt. Als Reste R1 seien beispielhaft genannt der Methyl-, Ethyl-, Isopropyl-, 1-Methyl-octyl-, 2-Ethyl-octyl-, 1-Methyl-hexyl-, 1,1-Dimethyl-pentyl-, 1,3,3-Trimethyl-hexyl-, 1-Ethyl-pentyl-, 2-Ethyl-pentyl-, Cyclohexyl-, 1-Methyl-n-propyl-, tert.-Butyl-, 1-Ethyl-n-propyl-, 1-Methyl-n-butyl- und 1,1-Dimethyl-n-propylrest.
   Als alkylsubstituierte m-Phenylendiamine kommen beispielsweise in Betracht: 2,4-Dimethyl-6-cyclohexyl-, 2-Cyclohexyl-4,6-diethyl-, 2-Cyclohexyl-2,6-isopropyl-, 2,4-Dimethyl-6-(1-ethyl-n-propyl) -, 2,4-Dimethyl-6-(1,1-dimethyl-n-propyl)-, 2-(1-Methyl-n-butyl)-4,6-dimethyl-phenylendiamin-1,3. Vorzugsweise verwendet werden 1-Methyl-3,5-diethyl-2,4- und/oder -2,6-phenylendiamine, 2,4-Dimethyl-6-tert.-butyl-, 2,4-Dimethyl-6-isooctyl- und 2,4-Dimethyl-6-cyclohexylphenylendiamin-1,3.
   Geeignet sind ferner 3,3'-di- und/oder 3,3',5,5'-tetra-n-alkylsubstituierte 4,4'-Diamino-diphenylmethane wie z.B. 3,3'-Dimethyl-, 3,3'-Diethyl-, 3,3'-Di-n-propyl-, 3,3',5,5'-Tetramethyl-, 3,3',5,5'-Tetraethyl- und 3,3',5,5'-Tetra-n-propyl-4,4'-diaminodiphenylmethan.
   Als alkylsubstituierte 4,4'-Diamino-diphenylmethane finden vorzugsweise solche der Formel 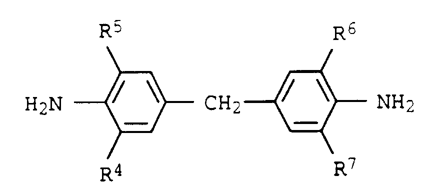
   Verwendung, in der R⁴, R⁵, R⁶ und R⁷ gleich oder verschieden sind und einen Methyl-, Ethyl-, Propyl-, Isopropyl-, sek.-Butyl- und tert.-Butylrest bedeuten, wobei jedoch mindestens einer der Reste ein Isopropyl- oder sek.-Butylrest sein muß. Die 4,4'-Diamino-diphenylmethane können auch im Gemisch mit Isomeren der Formeln 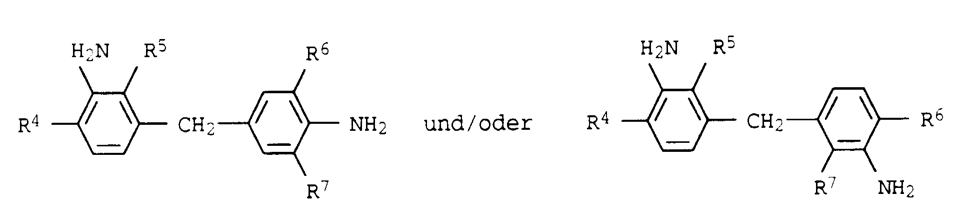 verwendet werden, wobei R⁴, R⁵, R⁶ und R⁷ die oben genannte Bedeutung haben.
   Beispielhaft genannt seien: 3,3',5-Trimethyl-5'-isopropyl-, 3,3',5-Triethyl-5'-isopropyl-, 3,3',5-Trimethyl-5'-sek.-butyl-, 3,3',5-Triethyl-5'-sek.-butyl-4,4'-diamino-diphenylmethan, 3,3'-Dimethyl-5,5'-diisopropyl-, 3,3'-Diethyl-5,5'-diisopropyl-, 3,3'-Dimethyl-5,5'-di-sek.-butyl-, 3,3'-Diethyl-5,5'-di-sek.-butyl-, 3,5-Dimethyl-3',5'-diisopropyl-, 3,5-Diethyl-3',5'-diisopropyl-, 3,5'-Dimethyl-3',5-di-sek.-butyl-, 3,5-Diethyl-3',5'-di-sek.-butyl-4,4'-diamino-diphenylmethan, 3-Methyl-3',5,5'-triisopropyl-, 3-Ethyl-3',5,5'-triisopropyl-, 3-Methyl-3'-ethyl-5,5'-diisopropyl-, 3-Methyl-3',5,5'-tri-sek.-butyl-, 3-Ethyl-3',5,5'-tri-sek.-butyl-4,4'-diamino-diphenylmethan, 3,3'-Diisopropyl-5,5'-di-sek.-butyl-, 3,5-Diisopropyl-3',5'-di-sek.-butyl-, 3-Ethyl-5-sek.-butyl-3',5'-diisopropyl-, 3-Methyl-5-tert.-butyl-3',5'-diisopropyl-, 3-Ethyl-5-sek.-butyl-3'-methyl-5'-tert.-butyl-, 3,3',5,5'-Tetraisopropyl- und 3,3',5,5'-Tetra-sek.-butyl-4,4'-diamino-diphenylmethan. Vorzugsweise verwendet werden 3,5-Dimethyl-3',5'-diisopropyl- und 3,3',5,5'-Tetraisopropyl-4,4'-diamino-di-phenylmethan. Die Diamino-diphenylmethane können einzeln oder in Form von Mischungen eingesetzt werden.
   Zur Herstellung der Urethan- und Harnstoffgruppen gebunden enthaltenden Elastomeren und elastischen Formkörpern hieraus werden zweckmäßigerweise die technisch gut zugänglichen 1,3,5-Triethyl-2,4-phenylendiamin, 1-Methyl-3,5-diethyl-2,4-phenylendiamin, Mischungen aus 1-Methyl-3,5-diethyl-2,4- und -2,6-phenylendiaminen, sogenanntes DETDA, Isomerengemische aus 3,3'-di- oder 3,3',5,5'-tetraalkylsubstituierten 4,4'-Diaminodiphenylmethanen mit 1 bis 4 C-Atomen im Alkylrest, insbesondere Methyl-, Ethyl- und Isopropylreste gebunden enthaltende 3,3',5,5'-tetraalkylsubstituierte 4,4'-Diamino-diphenylmethane sowie Gemische aus den genannten tetraalkylsubstituierten 4,4'-Diamino-diphenylmethanen und DETDA verwendet.
   Zur Erzielung spezieller mechanischer Eigenschaften kann es auch zweckmäßig sein, die alkylsubstituierten aromatischen Polyamine im Gemisch mit den vorgenannten niedermolekularen mehrwertigen Alkoholen, vorzugsweise zwei- und/oder dreiwertigen Alkoholen oder Dialkylen-glykolen zu verwenden.
   Die niedermolekularen Kettenverlängerungs- und/oder Vernetzungsmittel werden somit insbesondere ausgewählt aus der Gruppe der niedermolekularen di- und/oder trifunktionellen Alkohole, di- bis tetrafunktionellen Polyoxyalkylen-polyole mit einem Molekulargewicht bis 500 und der alkylsubstituierten aromatischen Diamine oder von Mischungen aus mindestens zwei der genannten Kettenverlängerungs- und/oder Vernetzungsmittel.
   Zur Herstellung der elastischen, Urethan- oder Urethan-und Harnstoffgruppen gebunden enthaltenden Elastomeren werden die organischen Polyisocyanate und/oder modifizierten organischen Polyisocyanatmischungen (a), höhermolekularen Verbindungen mit mindestens zwei reaktiven Wasserstoffatomen (b), N-perethoxylierten Polyoxyalkylen-polyamine (c) und niedermolekularen Kettenverlängerungs- und/oder Vernetzungsmittel (d) vorteilhafterweise in solchen Mengen zur Reaktion gebracht, daß das Äquivalenz-Verhältnis von NCO-Gruppen der Komponente (a) zur Summe der reaktiven Wasserstoffatome der Komponenten (b) bis (d) 0,85 bis 1,25:1, vorzugsweise 0,95 bis 1,15:1 und insbesondere 0,98 bis 1,05:1 beträgt und das Verhältnis von reaktiven Wasserstoffatomen der Komponente (b) zu reaktiven Wasserstoffatomen der Komponente (d) zweckmäßigerweise in einem Bereich von 1:2 bis 1:15, vorzugsweise von 1:2,9 bis 1:10 liegt.
e) Die Urethan- und Harnstoffgruppen gebunden enthaltenden Elastomeren bzw. Formkörper hieraus werden vorzugsweise in Abwesenheit von Katalysatoren hergestellt, während zur Bildung der Urethangruppen enthaltenden Elastomeren bzw. Formkörper hieraus zweckmäßigerweise Katalysatoren mitverwendet werden.
   Sofern Katalysatoren Anwendung finden, werden insbesondere stark basische Amine eingesetzt, wobei zur Erzielung von wärmebeständigen Formkörpern, die der on-line-Lackierung unterworfen werden können, zweckmäßigerweise auf eine eventuelle Mitverwendung von synergistisch wirkenden organischen Metallverbindungen z.B. organischen Zinnverbindungen, vollständig verzichtet wird. Als geeignete Katalysatoren seien beispielsweise genannt: Amidine, wie z.B. 2,3-Dimethyl-3,4,5,6-tetrahydropyrimidin und tertiäre Amine, wie z.B. Triethylamin, Tributylamin, Dimethylbenzylamin, N-Methyl-, N-Ethyl-, N-Cyclohexylmorpholin, N,N,N',N'-Tetramethyl-ethylendiamin, N,N,N',N'-Tetramethyl-butandiamin, N,N,N',N",N"-Pentamethyl-diethylentriamin, N,N,N',N'-Tetramethyl-diaminoethylether, N,N,N',N'-Tetramethyl-4,4'-diamino-dicyclohexylmethan, Bis-(dimethylaminopropyl)-harnstoff, Dimethylpiperazin, 1,2-Dimethylimidazol, 1-Aza-bicyclo-(3,3,0)-octan und vorzugsweise 1,4-Diazabicyclo-(2,2,2)-octan.
   Als Katalysatoren kommen ferner in Betracht:
   Tris-(dialkylaminoalkyl)-s-hexahydrotriazine, insbesondere Tris-(N,N-dimethylaminopropyl)-s-hexahydrotriazin, Tetraalkylammoniumhydroxide, wie z.B. Tetramethylammoniumhydroxid, Alkalihydroxide, wie z.B. Natriumhydroxid und Alkalialkoholate, wie z.B. Natriummethylat und Kaliumisopropylat sowie Alkalisalze von langkettigen Fettsäuren mit 10 bis 20 C-Atomen und gegebenenfalls seitenständigen OH-Gruppen. Verwendet werden üblicherweise 0,001 bis 5 Gew.%, vorzugsweise 0,05 bis 2 Gew.% Katalysator, bezogen auf das Gewicht der Komponenten (b) bis (d).
(f) Als geeignete Hilfsmittel (f) seien beispielhaft genannt: oberflächenaktive Substanzen, Schaumstabilisatoren, Zellregler, Füllstoffe, Flammschutzmittel, äußere und/oder innere Trennmittel, Farbstoffe, Pigmente, Hydrolyseschutzmittel, fungistatisch und bakteriostatisch wirkende Substanzen.
   Als oberflächenaktive Substanzen kommen Verbindungen in Betracht, welche zur Unterstützung der Homogenisierung der Ausgangsstoffe dienen und gegebenenfalls auch geeignet sind, die Zellstruktur zu regulieren. Genannt seien beispielsweise Emulgatoren, wie die Natriumsalze von Ricinusölsulfaten oder von Fettsäuren sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure und Ricinolsäure; Schaumstabilisatoren, wie Siloxan-Oxalkylen-Mischpolymerisate und andere Organopolysiloxane, oxethylierte Alkylphenole, oxethylierte Fettalkohole, Paraffinöle, Ricinusöl- bzw. Ricinolsäureester, Türkischrotöl und Erdnußöl und Zellregler, wie Paraffine, Fettalkohole und Dimethylpolysiloxane. Die oberflächenaktiven Substanzen werden üblicherweise in Mengen von 0,01 bis 5 Gewichtsteilen, bezogen auf 100 Gewichtsteile der Komponenten (b) bis (d) angewandt.
   Als Füllstoffe sind die an sich bekannten üblichen organischen und anorganischen Füllstoffe zu verstehen. Im einzelnen seien beispielhaft genannt: anorganische Füllstoffe wie silikatische Mineralien, beispielsweise Schichtsilikate wie Antigorit, Serpentin, Hornblenden, Amphibole, Chrisotil, Talkum und Zeolithe, Metalloxide, wie z.B. Kaolin, Aluminiumoxide, Titanoxide und Eisenoxide, Metallsalze wie z.B. Kreide, Schwerspat und anorganische Pigmente, wie z.B. Cadmiumsulfid und Zinksulfid. Vorzugsweise verwendet werden Kaolin (China Clay), Aluminiumsilikat und Copräzipitate aus Bariumsulfat und Aluminiumsilikat sowie natürliche und synthetische faserförmige Mineralien wie z.B. Wollastonit oder Glasfasern verschiedener Länge, die gegebenenfalls geschlichtet sein können. Als organische Füllstoffe kommen beispielsweise in Betracht: Ruß, Melamin, Kollophonium, Cyclopentadienylharze und Pfropfpolymerisate auf Styrol-Acrylnitrilbasis, die durch in situ Polymerisation von Acrylnitril-Styrol-Mischungen in Polyoxyalkylen-polyolen analog den Angaben der deutschen Patentschriften 11 11 394, 12 22 669, (US 3 304 273, 3 383 351, 3 523 093), 11 52 536 (GB 1 040 452) und 11 52 537 (GB 987 618) hergestellt und danach gegebenenfalls aminiert werden können sowie Filler-polyoxyalkylen-polyole oder -polyamine, bei denen wäßrige Polymerdispersionen in Polyoxyalkylen-polyol- oder -polyamin-dispersionen übergeführt werden. Die anorganischen und organischen Füllstoffe können einzeln oder als Gemische verwendet werden.
   Die anorganischen und/oder organischen Füllstoffe konnen der Reaktionsmischung beispielsweise in Mengen von 0,5 bis 35 Gew.%, vorzugsweise 3 bis 20 Gew.%, bezogen auf das Gewicht der Komponenten (a) bis (d), einverleibt werden.
   Geeignete Flammschutzmittel sind beispielsweise Trikresylphosphat, Tris-2-chlorethylphosphat, Tris-chlorpropylphosphat und Tris-2,3-dibrompropylphosphat.
   Außer den bereits genannten halogensubstituierten Phosphaten können auch anorganische Flammschutzmittel, wie z.B. Aluminiumoxidhydrat, Antimontrioxid, Arsenoxid, Ammoniumpolyphosphat und Calciumsulfat oder Melamin, Blähgraphit oder Mischungen davon, beispielsweise Mischungen aus Melamin, Blähgraphit und/oder Ammoniumpolyphosphat, zum Flammfestmachen der Formkörper verwendet werden. Im allgemeinen hat es sich als zweckmäßig erwiesen 5 bis 50 Gew.-Teile, vorzugsweise 5 bis 25 Gew.-Teile der genannten Flammschutzmittel für jeweils 100 Gew.-Teile der Komponenten (b) bis (d) zu verwenden.
   Nähere Angaben über die oben genannten anderen üblichen Hilfsmittel sind der Fachliteratur, beispielsweise der Monographie von J.H. Saunders und K.C. Frisch "High Polymers" Band XVI, Polyurethanes, Teil 1 und 2, Verlag Interscience Publishers 1962 bzw. 1964, oder dem Kunststoff-Handbuch, Polyurethane, Band VII, Hanser-Verlag, München, Wien, 1. und 2. Auflage, 1966 und 1983 zu entnehmen.
g) Zur Herstellung von elastischen Formkörpern auf Basis der erfindungsgemäßen Urethan- oder Urethan- und Harnstoffgruppen enthaltenden Elastomeren können der Reaktionsmischung aus den Komponenten (a) bis (d), die gegebenenfalls Katalysatoren (e) und/oder Hilfsmittel (f) enthalten kann, gegebenenfalls Treibmittel (g) zur Erzielung zelliger Formkörper einverleibt werden.
   Als Treibmittel zur Herstellung von zelligen Formkörpern eignet sich z.B. Wasser, das mit Isocyanatgruppen unter Bildung von Kohlendioxid reagiert. Die Wassermengen, die zweckmäßigerweise verwendet werden können, betragen 0,01 bis 5 Gew.-%, vorzugsweise 0,1 bis 1,0 Gew.% und insbesondere 0,2 bis 0,4 Gew.-%, bezogen auf das Gewicht der Komponenten (b) bis (d).
   Andere verwendbare Treibmittel sind niedrig siedende Flüssigkeiten, die unter dem Einfluß der exothermen Polyadditionsreaktion verdampfen. Geeignet sind Flüssigkeiten, welche gegenüber dem organischen Polyisocyanat inert sind und Siedepunkte unter 100°C aufweisen. Beispiele derartiger, vorzugsweise verwendeter Flüssigkeiten sind halogenierte, vorzugsweise fluorierte Kohlenwasserstoffe, wie z.B. Methylenchlorid und Dichlormonofluormethan, per- oder partiell fluorierte Kohlenwasserstoffe wie z.B. Trifluormethan, Difluormethan, Difluorethan, Tetrafluorethan und Heptafluorpropan, Kohlenwasserstoffe, wie z.B. n- und iso-Butan, n- und iso-Pentan sowie die technischen Gemische dieser Kohlenwasserstoffe, Propan, Propylen, Hexan, Heptan, Cyclobutan, Cyclopentan und Cyclohexan, Dialkylether, wie z.B. Dimethylether, Diethylether und Furan, Carbonsäureester, wie z.B. Methyl- und Ethylformiat, Ketone, wie z.B. Aceton und oder fluorierte und/oder perfluorierte, tertiäre Alkylamine, wie z.B. Perfluor-dimethyl-isopropylamin. Auch Gemische dieser niedrigsiedenden Flüssigkeiten untereinander und/oder mit anderen substituierten oder unsubstituierten Kohlenwasserstoffen können verwendet werden.
   Die zweckmäßigste Menge an niedrigsiedender Flüssigkeit zur Herstellung derartiger zellhaltiger elastischer Formkörper aus Urethan- oder Urethan- und Harnstoffgruppen gebunden enthaltenden Elastomeren hängt ab von der Dichte, die man erreichen will sowie gegebenenfalls von der Mitverwendung von Wasser. Im allgemeinen liefern Mengen von 1 bis 15 Gew.%, vorzugsweise 2 bis 11 Gew.%, bezogen auf das Gewicht der Komponenten (b) bis (d), zufriedenstellende Ergebnisse.

Die elastischen, kompakten Formkörper auf Basis der erfindungsgemäßen Urethan- und Harnstoffgruppen enthaltenden Elastomeren werden zweckmäßigerweise nach dem one shot-Verfahren mit Hilfe der Niederdruck-Technik oder insbesondere der Reaktionsspritzguß-Technik (RIM) in offenen oder vorzugsweise geschlossenen Formwerkzeugen, hergestellt. Zur Herstellung der zelligen Formkörper wird die Reaktion insbesondere unter Verdichtung in einem geschlossenen Formwerkzeug durchgeführt. Die Reaktionsspritzguß-Technik wird beispielsweise beschrieben von H. Piechota und H. Röhr in "Integralschaumstoffe", Carl Hanser-Verlag, München, Wien 1975; D.J. Prepelka und J.L. Wharton in Journal of Cellular Plastics, März/April 1975, Seiten 87 bis 98 und U. Knipp in Journal of Cellular Plastics, März/April 1973, Seiten 76-84.

Bei Verwendung einer Mischkammer mit mehreren Zulaufdüsen können die Ausgangskomponenten einzeln zugeführt und in der Mischkammer intensiv vermischt werden. Als besonders vorteilhaft hat es sich erwiesen, nach dem Zweikomponenten-Verfahren zu arbeiten und die Aufbaukomponenten (b) bis (d) und gegebenenfalls (e) bis (g) in der Komponente (A) zu vereinigen und als Komponente (B) die organischen Polyisocyanate oder modifizierte Polyisocyanatmischungen zu verwenden. Vorteilhaft ist hierbei beispielsweise, daß die Komponenten (A) und (B) getrennt gelagert und raumsparend transportiert werden können und bei der Verarbeitung nur noch in den entsprechenden Mengen gemischt werden müssen.

Die Menge des in das Formwerkzeug eingebrachten Reaktionsgemisches wird so bemessen, daß die erhaltenen gegebenenfalls zelligen Formkörper eine Dichte von 250 bis 1400 kg/m³ besitzen, wobei die kompakten Formkörper eine Dichte vorzugsweise von 1000 bis 1400 kg/m³, und insbesondere von 1000 bis 1200 kg/m³, die zelligen und mikrozellularen Formkörper vorzugsweise eine Dichte von 400 bis 1100 kg/m³, z.B. für Schuhsohlen von 450 bis 750 kg/m³, insbesondere von 550 bis 650 kg/m³ und für Verkleidungselemente von 700 bis 1200 kg/m³, insbesondere von 950 bis 1150 kg/m³ aufweisen. Die Ausgangskomponenten werden üblicherweise mit einer Temperatur von 15 bis 80°C, vorzugsweise von 30 bis 65°C in das Formwerkzeug eingebracht. Die Formwerkzeugtemperatur betragt zweckmaßigerweise 20 bis 110°C, vorzugsweise 35 bis 95°C und insbesondere 35 bis 75°C. Die Verdichtungsgrade zur Herstellung der mikrozellularen oder zelligen Formkörper liegen zwischen 1,1 und 8, vorzugsweise zwischen 2 und 6.

Zur Verbesserung der Entformung der nach dem erfindungsgemäß hergestellten Elastomer-Formkörper hat es sich als vorteilhaft erwiesen, die Formwerkzeuginnenflächen zumindest zu Beginn einer Produktionsreihe mit üblichen äußeren Formtrennmitteln, beispielsweise auf Wachs- oder Silikonbasis oder insbesondere mit wäßrigen Seifenlösungen, zu beschichten. Insbesondere bewährt haben sich jedoch und daher vorzugsweise verwendet werden innere Formtrennmittel, wie sie beispielsweise beschrieben werden in der EP-A-153 639, EP-A-180 749 (AU 85/47 498), EP-A-173 888 (US 4 519 965), WO 84/03288 (EP-A-119 471) und WO 86/01215. Die Formstandzeiten betragen in Abhängigkeit von der Größe und Geometrie des Formteils durchschnittlich 3 bis 60 Sekunden.

Die nach dem erfindungsgemäßen Verfahren erhältlichen kompakten Formkörper finden vorzugsweise Verwendung in der Kraftfahrzeug- und Flugzeugindustrie, beispielsweise als Stoßstangenabdeckungen und insbesondere Airbagabdeckungen, Rammschutzleisten, Karosserieteile, wie z.B. Regenrinnen, Kotflügel, Spoiler, Radkastenverbreiterungen sowie für andere technische Gehäuseteile und Laufrollen. Die zelligen Formkörper eignen sich für Schuhsohlen, Armlehnen, Kopfstützen, Sonnenblenden, Sicherheitsabdeckungen in Fahrzeugkabinen, sowie als Motorrad-, Traktor- oder Fahrradsattel, Sitzkissen und Deckschichten in Verbundkörpern.

### Beispiele

### Herstellung von N,N,N',N'-Tetra-(2-hydroxyethyl)-polyoxypropylen-diamin-Mischungen

### Beispiel 1

### In einem 10 1-Druckautoklaven wurden zur Abtrennung der flüchtigen Bestandteile 3560 g (8,9 Mole) eines Polyoxypropylen-diamins der Struktur

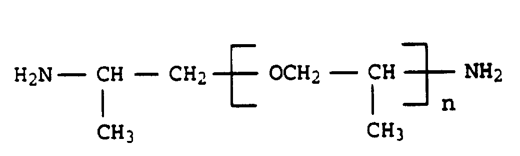

mit einem mittleren Molekulargewicht von 400 (Jeffamine® D 400 der Texaco AG) eine Stunde lang bei einer Temperatur von 105°C und unter vermindertem Druck (1,33 mbar) behandelt. Anschließend wurde der Druckautoklav bis zu einem absoluten Druck von 3 bar mit Stickstoff gefüllt und in einem Zeitraum von 4 Stunden bei 105°C 1722 g (39,14 Mol) Ethylenoxid zudosiert. Nach einer Reaktionszeit von 10 Stunden bei 105°C wurde das nicht umgesetzte Ethylenoxid unter vermindertem Druck bei 33 mbar in 30 Minuten und anschließend bei 1,33 mbar in 60 Minuten vollständig abdestilliert. Das auf diese Weise hergestellte N-perethoxylierte Polyoxypropylendiamin besaß eine Hydroxylzahl von 344, eine Viskosität von 1110 mPas bei 25°C (nach Ubbelohde), einen Restwassergehalt von 0,015 Gew.-% und einen pH-Wert von 11,7.

### Beispiel 2

Man verfuhr analog den Angaben des Beispiels 1, verwendete jedoch 5260 g (2,63 Mol) eines Polyoxypropylen-diamins mit einem mittleren Molekulargewicht von 2000 (Jeffamine® D 2000 der Texaco AG) und 509 g (11,568 Mol) Ethylenoxid, das in 2 Stunden bei 105°C zudosiert wurde.

Man erhielt auf diese Weise ein N-perethoxyliertes Polyoxypropylen-diamin mit einer Hydroxylzahl von 101, einer Viskosität von 720 mPas bei 25°C (nach Ubbelohde), einem Restwassergehalt von 0,07 Gew.-% und einem pH-Wert von 11,7.

### Herstellung der Urethan- und Harnstoffgruppen gebunden enthaltenden Formkörper

### Beispiel 3

### Polyoxyalkylen-polyamin-Komponente (A):

Mischung aus
- 66,5 Gew.-Teilen: Polyoxypropylen-diamin (Jeffamine® D 2000),
- 3,0 Gew.-Teilen: N-perethoxyliertem Polyoxypropylen-diamin, hergestellt gemäß Beispiel 1,
- 30,0 Gew.-Teilen: einer Mischung aus 1-Methyl-3,5-diethylphenylen-diamin-2,4 und -phenylendiamin-2,6 im Gewichtsverhältnis 80:20 (DETDA) und
- 0,5 Gew.-Teilen: Ölsäure.

### Isocyanat-Komponente (B-Komponente):

NCO-Gruppen enthaltendes Prepolymer mit einem NCO-Gehalt von 20 Gew.-%, hergestellt durch Umsetzung eines Carbodiimidgruppen enthaltenden 4,4'-Diphenylmethan-diisocyanates mit einem NCO-Gehalt von 29,5 Gew.-% und eines mit Dipropylenglykol gestarteten Polyoxypropylen-diols mit einer Hyroxylzahl von 56.

Die Polyoxyalkylen-polyamin (A)- und Isocyanat (B)-Komponenten wurden im Mischungsverhältnis A:B = 100:97,7 Gew.-Teilen auf einer Hochdruckdosieranlage vom Typ Puromat® 30 der Elastogran Polyurethane GmbH, Geschäftsbereich Maschinenbau, gemischt und in ein auf 90°C temperiertes metallisches Formwerkzeug mit den Innenabmessungen 400x200x2 mm eingespritzt. Die Temperatur der A-Komponente betrug 65°C und die der B-Komponente 50°C.

Nach einer Formstandzeit von 20 Sekunden wurde der Formkörper entformt. Bis zu 30 Minuten nach der Entformung war kein Auftreten von Kaltsprödigkeit, d.h. ein Bruch der Prüfplatte, zu beobachten. Danach wurde die Prüfung abgebrochen.

### Vergleichsbeispiel I

### Polyoxyalkylen-polyamin-Komponente (A):

Mischung aus
- 69,5 Gew.-Teilen: Polyoxypropylen-diamin (Jeffamin® D 2000),
- 30,0 Gew.-Teilen: einer Mischung aus l-Methyl-3,5-diethylphenylen-diamin-2,4 und 1-Methyl-3,5-diethyl-phenylen-diamin-2,6 im Gew.-Verhältnis 80:20 (DETDA) und
- 0,5 Gew.-Teilen: Ölsäure.

### Isocyanat-Komponente (B-Komponente): analog Beispiel 3

Man verfuhr analog den Angaben des Beispiels 3, verwendete jedoch ein Mischungsverhältnis von Polyoxyalkylen-polyamin (A)- zu Isocyanat (B)-Komponente von 100:94,2 Gew.-Teilen. Bereits 10 Minuten nach dem Entformen des Formkörpers trat Kaltsprödigkeit auf, wodurch die Prüfplatte zerbrach.

### Beispiel 4

### Polyoxyalkylen-polyamin-Komponente (A):

Mischung aus
- 43,5 Gew.-Teilen: N,N'-Dibenzyl-polyoxypropylen-diamin mit einem Molekulargewicht von ungefähr 2180 (hergestellt gemäß EP-A-438 695, Beispiel 1)
- 20,0 Gew.-Teilen: N-perethoxyliertes Polyoxypropylen-diamin, hergestellt gemäß Beispiel 2,
- 30,0 Gew.-Teilen: einer Mischung aus 1-Methyl-3,5-diethylphenylendiamin-2,4 und -phenylen-diamin-2,6 im Gewichtsverhältnis 80:20 (DETDA),
- 4,1 Gew.-Teilen: N,N'-Polyoxypropylen-dicyclopentylimin mit einem Molekulargewicht von 350 bis 700,
- 1,9 Gew.-Teilen: Zinkstearat und
- 0,5 Gew.-Teilen: Ölsäure.

### Isocyanat-Komponente (B-Komponente): analog Beispiel 3

Der Polyoxyalkylen-polyamin-Komponente (A) wurden zunächst als Füllstoff gemahlene Glasfasern in einer solchen Menge einverleibt, daß der Glasfasergehalt im hergestellten Formkörper 20 Gew.-% betrug.

Die glasfaserhaltige Polyoxyalkylenpolyamin(A)- und Isocyanat(B)-Komponenten wurden im Mischungsverhältnis A:B = 100:66,9 Gew.-Teilen auf einer Hochdruckdosieranlage vom Typ Puromat® 30 gemischt und in ein auf 65°C temperiertes metallisches Formwerkzeug mit den Innenabmessungen 400x200x2 mm eingespritzt. Die Temperatur der A-Komponente betrug 65°C und die der B-Komponente 50°C.

Nach einer Formstandzeit von 20 Sekunden wurde der Formkörper entformt. Bis zu 30 Minuten nach der Entformung wurde keine Kaltsprödigkeit beobachtet, d.h. ein Bruch der Prüfplatte trat nicht ein. Danach wurde die weitere Prüfung abgebrochen.

### Vergleichsbeispiel II

### Polyoxyalkylen-polyamin-Komponente (A):

Mischung aus
- 63,5 Gew.-Teilen: N,N'-Dibenzyl-polyoxypropylen-diamin mit einem Molekulargewicht von ungefähr 2180 (hergestellt gemäß EP-A-438 695, Beispiel 1)
- 30,0 Gew.-Teilen: einer Mischung aus 1-Methyl-3,5-diethylphenylendiamin-2,4 und -phenylen-diamin-2,6 im Gewichtsverhältnis 80:20 (DETDA),
- 4,1 Gew.-Teilen: N,N'-Polyoxypropylen-dicyclopentylimin mit einem Molekulargewicht von 350 bis 700,
- 1,9 Gew.-Teilen: Zinkstearat und
- 0,5 Gew.-Teilen: Olsäure.

### Isocyanat-Komponente (B-Komponente): analog Beispiel 3

Man verfuhr analog den Angaben des Beispiels 4, verwendete jedoch ein Mischungsverhältnis von Polyoxyalkylen-polyamin(A)- zu Isocyanat(B)-Komponente von 100:64,6 Gew.-Teilen. Bereits innerhalb einer Minute nach dem Entformen des Formkörpers trat Kaltsprödigkeit auf, wodurch die Prüfplatte zerbrach.

Das in Beispiel 4 und Vergleichsbeispiel II verwendete N,N'-Polyoxypropylen-dicyclopentylimin wurde auf folgende Weise hergestellt:

520 g Polyoxypropylen-diamin mit einem mittleren Molekulargewicht von 230 (Jeffamine® D 230 der Texaco AG) wurden mit 675 g einer Lösung, die bestand aus 425 g Cyclopentanon und 250 g Toluol bei Raumtemperatur gemischt und die erhaltene Reaktionsmischung so lange unter Rückflußkühlung am Wasserabscheider erhitzt, bis sich kein Wasser mehr abschied (Dauer ca. 9 Stunden). Danach wurde das Toluol und überschüssiges Cyclopentanon unter vermindertem Druck bei einer Temperatur von 100 bis 120°C abdestilliert. Man erhielt als Rückstand 810 g Polyoxypropylen-dicyclopentylimin, das ohne weitere Reinigung verwendet wurde.

### Beispiel 5

### Herstellung einer Airbagabdeckung

A-Komponente: Mischung aus
- 40,2 Gew.-Teilen: eines mit Glycerin gestarteten Polyoxypropylen (86 Gew.-%)-polyoxyethylen (14 Gew.-%)-polyols mit einer Hydroxylzahl von 26,
- 37,5 Gew.-Teilen: eines mit Trimethylolpropan gestarteten Polyoxypropylen (80 Gew.-%)-polyoxyethylen (20 Gew.-%)-polyols mit einer Hydroxylzahl von 27,
- 5,0 Gew.-Teilen: N-perethoxyliertes Polyoxypropylen-diamin, hergestellt nach Beispiel 2,
- 5,0 Gew.-Teilen: Ethylenglykol,
- 5,0 Gew.-Teilen: Polyoxytetramethylenglykol mit einer Hydroxylzahl von ungefähr 112,
- 0,5 Gew.-Teilen: einer 33 gew.-%igen Lösung von Diazabicyclooctan in Ethylenglykol,
- 1,8 Gew.-Teilen: Katalysator auf Diazabicyclooctanbasis (DABCO® 8154 der Firma Air Products) und
- 5,0 Gew.-Teilen: Schwarzpaste (Ruß)

### B-Komponente:

NCO-Gruppen enthaltendes Prepolymer mit einem NCO-Gehalt von 26 Gew.-%, hergestellt durch Umsetzung von 4,4'-Diphenylmethan-diisocyanat und eines Carbodiimidgruppen enthaltenden 4,4'-Diphenylmethan-diisocyanates mit einem NCO-Gehalt von 29,5 Gew.-% mit Trioxypropylenglykol.

Die A- und B-Komponenten wurden im Mischungsverhältnis 100:41 Gew.-Teilen auf einer Hochdruckdosieranlage vom Typ Puromat® 30 gemischt und in ein auf 50°C temperiertes metallisches Formwerkzeug (Airbagabdeckung der Chrysler AG, Innenabmessungen 260x175x50 mm) eingespritzt. Die Temperatur der A-Komponente betrug 40 und die der B-Komponente 30°C. Nach 100 Sekunden wurde der Polyurethan-Formkörper entformt. Nach einer Lagerzeit von 48 Stunden wurde der Formkörper für Druchstoßversuche in eine Haltevorrichtung eingespannt und ein Stempel mit den Ausmaßen 120x80 mm und der Masse 20,8 kg wurde mit einer Geschwindigkeit von 16 km/h bei den Temperaturen -40°C, 25°C und 80°C auf ihn einwirken gelassen. Der Polyurethan-Formkörper wurde durchstoßen und zerriß nur, wie gewünscht, an der vorgegebenen Sollbruchstelle.

### Vergleichsbeispiel III

### Herstellung einer Airbagabdeckung

A-Komponente: Mischung aus
- 45,2 Gew.-Teilen: eines mit Glycerin gestarteten Polyoxypropylen(86 Gew.-%)-polyoxyethylen (14 Gew.-%)-polyols mit einer Hydroxylzahl von 26,
- 37,5 Gew.-Teilen: eines mit Trimethylolpropan gestarteten Polyoxypropylen (80 Gew.-%)-polyoxyethylen (20 Gew.-%)-polyols mit einer Hydroxylzahl von 27,
- 5,0 Gew.-Teilen: Ethylenglykol,
- 5,0 Gew.-Teilen: Polyoxytetramethylenglykol mit einer Hydroxylzahl von ungefähr 112,
- 0,5 Gew.-Teilen: einer 33 gew.-%igen Lösung von Diazabicyclooctan in Ethylenglykol,
- 1,8 Gew.-Teilen: Katalysator auf Diazabicyclooctanbasis (DABCO® 8154 der Firma Air Products) und
- 5,0 Gew.-Teilen: Schwarzpaste (Ruß)

### B-Komponente: analog Beispiel 5

Zur Herstellung der Airbagabdeckung verfuhr man analog den Angaben des Beispiels 5, verwendete jedoch ein Mischungsverhältnis von A-:B-Komponente von 100:40 Gew.-Teilen.

Man erhielt einen Polyurethan-Formkörper, der jedoch den in Beispiel 5 beschriebenen Durchstoßversuch nicht bestand, da er an einer beliebigen Stelle zerriß.

## Patentansprüche

1. Verfahren zur Herstellung von elastischen, Urethan- oder Urethan- und Harnstoffgruppen gebunden enthaltenden Elastomeren durch Umsetzung von
a) mindestens einem organischen und/oder modifizierten organischen Polyisocyanat mit
b) mindestens einer Verbindung mit reaktiven Wasserstoffatomen, einer Funktionalität von 2 bis 4 und einem Molekulargewicht von 1200 bis 8000, ausgewählt aus der Gruppe der Polyole, der Polyoxyalkylen-polyamine mit primären und/oder sekundären Aminogruppen und Polyoxyalkylen-polyaldimine und/oder -polyketimine oder Mischungen davon,
c) mindestens einem oxalkylierten Polyoxyalkylen-polyamin und
d) niedermolekularen Kettenverlängerungs- und/oder Vernetzungsmitteln
in Gegenwart oder Abwesenheit von
e) Katalysatoren und/oder
f) Hilfsmitteln,
dadurch gekennzeichnet, daß man als oxalkylierte Polyoxyalkylen-polyamine (c) N-perethoxylierte Polyoxyalkylen-polyamine verwendet.

2. Verfahren nach Anspruch 1, dadurch gekennzeichnet, daß man als oxalkylierte Polyoxyalkylen-polyamine (c) Di- und/oder Tri-[N,N-di-(2-hydroxyethyl)amino]-polyoxyalkylene mit einem Molekulargewicht von 400 bis 6000 verwendet.

3. Verfahren nach Anspruch 1, dadurch gekennzeichnet, daß man als oxalkylierte Polyoxyalkylen-polyamine (c) N-perethoxylierte Polyoxyalkylen-polyamine verwendet, die hergestellt werden durch Umsetzung von Polyoxyalkylen-di- und/oder triaminen mit primären Aminogruppen mit 1,0 bis 1,2 Molen Ethylenoxid pro -NH-Funktion in Abwesenheit von Katalysatoren bei einer Temperatur im Bereich von 90 bis 120°C und einem Druck von 1 bis 8 bar.

4. Verfahren nach Anspruch 1, dadurch gekennzeichnet, daß die N-perethoxylierten Polyoxyalkylen-polyamine (c) in einer Menge von 1 bis 50 Gew.-Teilen bezogen auf 100 Gew.-Teile der höhermolekularen Verbindungen mit mindestens zwei reaktiven Wasserstoffatomen (b) und niedermolekularen Kettenverlängerungs- und/oder Vernetzungsmitteln (d) Verwendung finden.

5. Verfahren nach Anspruch 1, dadurch gekennzeichnet, daß die niedermolekularen Kettenverlängerungs- und/oder Vernetzungsmittel ausgewählt sind aus der Gruppe der niedermolekularen di- und/oder trifunktionellen Alkohole, di- bis tetrafunktionellen Polyoxyalkylen-polyole mit einem Molekulargewicht bis 500 und der alkylsubstituierten aromatischen Diamine oder Mischungen davon.

6. Verfahren nach Anspruch 1, dadurch gekennzeichnet, daß man Formkörper nach dem one shot-Verfahren mit Hilfe der RIM-Technik in einem geschlossenen Formwerkzeug herstellt.

7. Verfahren zur Herstellung von zelligen, elastischen, Urethan- oder Urethan- und Harnstoffgruppen gebunden enthaltenden Elastomeren nach Anspruch 1, dadurch gekennzeichnet, daß man die Umsetzung in Gegenwart von
g) Treibmitteln
nach der RIM-Technik und unter Verdichtung in einem geschlossenen Formwerkzeug durchführt.

8. Verfahren zur Herstellung von elastischen, Urethan- oder Urethan- und Harnstoffgruppen gebunden enthaltenden Airbagabdeckungen durch Umsetzung von
a) mindestens einem organischen und/oder modifizierten organischen Polyisocyanat mit
b) mindestens einer Verbindung mit reaktiven Wasserstoffatomen, einer Funktionalität von 2 bis 4 und einem Molekulargewicht von 1200 bis 8000, ausgewählt aus der Gruppe der Polyole, der Polyoxyalkylen-polyamine mit primären und/oder sekundären Aminogruppen und Polyoxyalkylen-polyaldimine und/oder -polyketimine oder Mischungen davon,
c) mindestens einem oxalkylierten Polyoxyalkylenpolyamin und
d) niedermolekularen Kettenverlängerungs- und/oder Vernetzungsmitteln
in Gegenwart oder Abwesenheit von
e) Katalysatoren und/oder
f) Hilfsmitteln,
in einem geschlossenen Formwerkzeug, dadurch gekennzeichnet, daß man als oxalkylierte Polyoxyalkylen-polyamine (c) N-perethoxylierte Polyoxyalkylen-polyamine verwendet.

9. Verfahren nach Anspruch 8, dadurch gekennzeichnet, daß man als oxalkylierte Polyoxyalkylen-polyamine (c) Di- und/oder Tri-[N,N-di(2-hydroxyethyl)amino}polyoxyalkylene mit einem Molekulargewicht von 400 bis 6000 verwendet.

## Claims

1. A process for the preparation of resilient elastomers containing bonded urethane groups or urethane and urea groups, by reacting
a) at least one organic and/or modified organic polyisocyanate with
b) at least one compound containing reactive hydrogen atoms and having a functionality of from 2 to 4 and a molecular weight of from 1200 to 8000, selected from the group consisting of the polyols, polyoxyalkylene-polyamines containing primary and/or secondary amino groups, and polyoxyalkylene-polyaldimines and/or polyketimines, or mixtures thereof, c) at least one oxyalkylated polyoxyalkylene-polyamine and
d) low-molecular-weight chain extenders and/or crosslinking agents,
in the presence or absence of
e) catalysts and/or
f) auxiliaries,
wherein the oxyalkylated polyalkylene-polyamines (c) used are N-perethoxylated polyoxyalkylene-polyamines.

2. A process as claimed in claim 1, wherein the oxyalkylated polyoxylene-polyamines (c) used are di-and/or tri- [N,N-di-(2-hydroxyethyl)amino]polyoxyalkylenes having a molecular weight of from 400 to 6000.

3. A process as claimed in claim 1, wherein the oxyalkylated polyoxyalkylene-polyamines (c) used are N-perethoxylated polyoxyalkylene-polyamines prepared by reacting polyoxyalkylene diamines and/or triamines containing primary amino groups with from 1.0 to 1.2 mol of ethylene oxide per -NH-function, in the absence of catalysts at from 90 to 120°C and at from 1 to 8 bar.

4. A process as claimed in claim 1, wherein the N-perethoxylated polyoxyalkylene-polyamines (c) are used in an amount of from 1 to 50 parts by weight, based on 100 parts by weight of the relatively high-molecular-weight compounds containing at least two reactive hydrogen atoms (b) and low-molecular-weight chain extenders and/or crosslinking agents (d).

5. A process as claimed in claim 1, wherein the low-molecular-weight chain extenders and/or crosslinking agents are selected from the group consisting of low-molecular-weight difunctional and/or trifunctional alcohols, difunctional to tetrafunctional polyoxyalkylene-polyols having a molecular weight of up to 500, and alkyl-substituted aromatic diamines, or mixtures thereof.

6. A process as claimed in claim 1, wherein moldings are produced in a closed mold by the one-shot RIM method.

7. A process for the production of cellular, resilient elastomers containing bonded urethane groups or urethane and urea groups as claimed in claim 1, wherein the reaction is carried out in a closed mold by the RIM method with compaction in the presence of
g) blowing agents.

8. A process for the production of resilient airbag covers containing bonded urethane groups or urethane and urea groups, by reacting
a) at least one organic and/or modified organic polyisocyanate with
b) at least one compound containing reactive hydrogen atoms and having a functionality of from 2 to 4 and a molecular weight of from 1200 to 8000, selected from the group consisting of the polyols, polyoxyalkylene-polyamines containing primary and/or secondary amino groups, and polyoxyalkylene-polyaldimines and/or polyketimines, or mixtures thereof,
c) at least one oxyalkylated polyoxyalkylene-polyamine and
d) low-molecular-weight chain extenders and/or crosslinking agents,
in the presence or absence of
e) catalysts and/or
f) auxiliaries,
in a closed mold, wherein the oxyalkylated polyoxyalkylene-polyamines (c) used are N-perethoxylated polyoxyalkylene-polyamines.

9. A process as claimed in claim 8, wherein the oxyalkylated polyoxyalylene-polyamines (c) used are di-and/or tri-[N,N-di(2-hydroxyethyl)amino]polyoxyalkylenes having a molecular weight of from 400 to 6000.

## Revendications

1. Procédé de préparation d'un élastomère élastique, contenant en liaison des radicaux uréthanne ou uréthanne et urée, par la réaction
a) d'au moins un polyisocyanate organique et/ou organique modifié avec
b) au moins un composé comportant des atomes d'hydrogène réactifs, d'une fonctionnalité de 2 à 4 et d'un poids moléculaire de 1200 à 8000, choisi dans le groupe formé par les polyols, les polyoxyalkylène-polyamines avec des radicaux amino primaires et/ou secondaires et les polyoxyalkylène-polyaldimines et/ou les polycétimines, ou des mélanges de ces composés,
c) au moins une polyoxyalkylène-polyamine oxalkylée, et
d) des agents de réticulation et/ou d'allongement des chaînes, de faibles poids moléculaires,
en présence ou en l'absence
e) de catalyseurs et/ou
f) d'adjuvants,
caractérisé en ce que, à titre de polyoxyalkylène-polyamines oxalkylées (c), on utilise des polyoxyalkylène-polyamines N-peréthoxylées.

2. Procédé suivant la revendication 1, caractérisé en ce que, à titre de polyoxyalkylène-polyamines oxalkylées (c), on utilise des di- et/ou tri-[N,N-di-(2-hydroxyéthyl)amino]-polyoxyalkylènes d'un poids moléculaire de 400 à 6000.

3. Procédé suivant la revendication 1, caractérisé en ce que, à titre de polyoxyalkylène-polyamines oxalkylées (c), on utilise des polyoxyalkylène-polyamines N-peréthoxylées que l'on prépare par la réaction de polyoxyalkylènedi- et/ou triamines avec des radicaux amino primaires avec 1,0 à 1,2 mole d'oxyde d'éthylène par fonction -NH- en l'absence de catalyseurs et à une température qui varie de 90 à 120°C et sous une pression de 1 à 8 bars.

4. Procédé suivant la revendication 1, caractérisé en ce que l'on utilise les polyoxyalkylène-polyamines N-peréthoxylées (c) en une proportion de 1 à 50 parties en poids par rapport à 100 parties en poids des composés à poids moléculaires supérieurs avec au moins deux atomes d'hydrogène réactifs (b) et des agents de réticulation et/ou d'allongement des chaînes de faibles poids moléculaires (d).

5. Procédé suivant la revendication 1, caractérisé en ce que l'on choisit les agents de réticulation et/ou d'allongement des chaînes de faibles poids moléculaires dans le groupe formé par les alcools di- et/ou trifonctionnels de faibles poids moléculaires, les polyoxyalkylène-polyols di- à tétrafonctionnels d'un poids moléculaire allant jusqu'à 500 et les diamines aromatiques alkylsubstituées, ou des mélanges de ces composés.

6. Procédé suivant la revendication 1, caractérisé en ce que l'on prépare des articles moulés selon le procédé one shot (d'un seul coup) à l'aide de la technique de MIR (moulage par injection à réaction) dans un outil de moulage fermé.

7. Procédé de préparation d'élastomères cellulaires, élastiques, contenant des radicaux uréthanne ou uréthanne et urée en liaison, suivant la revendication 1, caractérisé en ce que l'on entreprend la réaction en présence
g) d'agents porogènes,
selon la technique de MIR et sous compression ou densification dans un outil de moulage fermé.

8. Procédé de fabrication de recouvrement d'airbags (coussins d'air) élastiques, contenant des radicaux uréthanne ou uréthanne et urée en liaison, par la réaction
a) d'au moins un polyisocyanate organique et/ou organique modifié avec
b) au moins un composé comportant des atomes d'hydrogène réactifs, d'une fonctionnalité de 2 à 4 et d'un poids moléculaire de 1200 à 8000, choisi dans le groupe formé par les polyols, les polyoxyalkylène-polyamines avec des radicaux amino primaires et/ou secondaires et les polyoxyalkylène-polyaldimines et/ou les polycétimines, ou des mélanges de ces composés,
c) au moins une polyoxyalkylène-polyamine oxalkylée, et
d) des agents de réticulation et/ou d'allongement des chaînes, de faibles poids moléculaires,
en présence ou en l'absence
e) de catalyseurs et/ou
f) d'adjuvants,
dans un outil de moulage fermé, caractérisé en ce que, à titre de polyoxyalkylène-polyamines oxalkylées (c), on utilise des polyoxyalkylène-polyamines N-peréthoxylées.

9. Procédé suivant la revendication 8, caractérisé en ce que, à titre de polyoxyalkylène-polyamines oxalkylées (c), on utilise des di- et/ou tri-[N,N-di(2-hydroxyéthyl)amino]-polyoxyalkylènes d'un poids moléculaire de 400 à 6000.
